# EUROPÄISCHE PATENTANMELDUNG

(11) **EP 4 047 224 A1**
(43) Veröffentlichungstag der Anmeldung: **24.08.2022**
(21) Anmeldenummer: 22157373.6
(22) Anmeldetag: 17.02.2022
(51) Int. Cl.: F16B 7/18

(54) **VERBINDUNGSELEMENT**

(30) Priorität: 17.02.2021 DE 202021100785 U
(71) Anmelder: RSG Automation Technics GmbH & Co. KG, 74321 Bietigheim-Bissingen (DE)
(72) Erfinder: Dr. Ecker, Andreas, 74321 Bietigheim Bissingen (DE); Burmeister, Julian, 74321 Bietigheim Bissingen (DE)
(74) Vertreter: Schmidt, Axel

(57) **Zusammenfassung**

Die vorliegende Erfindung betrifft ein Verbindungselement (3) für Strangprofil- oder Strangpressprofil-Abschnitte (2), wobei das Verbindungselement (1) Kontaktbereiche (5) für den direkten Kontakt mit den jeweiligen Strangpressprofil-Abschnitten aufweist, welche Kontaktbereiche an ihrem Umfang verteilt angeordnete Eingriffselemente (6) umfassen und die Eingriffselemente zum Spiel-armen Einschieben in Nut-Schienen (4) als Ausnehmungen eines jeweiligen Strangpressprofil-Abschnitts ausgebildet sind, wobei an dem Verbindungselement für jeden Kontaktbereich zusätzlich eine Fixierung (7) an einem jeweiligen Strangpressprofil-Abschnitt vorgesehen ist und jede Fixierung des Verbindungselements an einem jeweiligen Strangpressprofil-Abschnitt eine Betätigungsöffnung (10) aufweist.

Um ein Verbindungselement mit verbesserten mechanischen Eigenschaften zu schaffen, das zudem eine schnellere Montage ermöglicht, wird vorgeschlagen, dass eine für eine Verschraubung des Verbindungselements vorgesehene Betätigungsöffnung (10) zur Aufnahme eines Führungselementes (F) ausgebildet ist, wobei das Führungselement über die Betätigungsöffnung hinweg mindestens teilweise vorsteht oder herausragt.

## Beschreibung

Die vorliegende Erfindung betrifft ein Verbindungselement für Strangprofil- oder Strangpressprofil-Abschnitte.

Aus dem Stand der Technik ist eine Verwendung von Strangprofilteilen sehr bekannt, wo sie diese prismatischen Profile als Bauelemente im konstruktiven Maschinenbau vielseitig eingesetzt werden. Strangprofile oder Strangpressprofile aus Kunststoff oder Aluminium etc. werden u.a. als Maschinebauprofile und Montagesysteme verwendet, also sowohl beispielsweise für den Bau von Tragkonstruktionen für Fertigungsstraßen, als auch zum Aufbau von Gehäusen oder auch zum Bau von Kabinen. Durch i.d.R. gleichmäßig über einen Umfang verteilt angeordnete Nut-Schienen der Strangprofile werden Verbindungen zu Anbauteilen oder anderen Strangprofilen unter Verwendung von Schraubverbindungen realisiert, die in einen in einer Nut-Schiene verschieblichen Nutstein eingreifen. Dabei können derartige Gehäuse oder Kabinen auch durch schwenkbare oder verschiebliche Türen, Klappen oder ähnliche Abdeckungsteile abdeckbare oder verschließbare Öffnungen aufweisen. Diese Klappen oder Türen weisen i.d.R. ein flächiges Blatt aus Glas, Blech oder Verbundmaterial auf, das durch einen aus Strangprofil-Abschnitten gebildeten Rahmen umschlossen ist. Auch zur Bildung derartiger Rahmen werden entsprechend abgelängte Strangprofilteile miteinander unter Verwendung von Verbindungselementen verbunden. Sonst werden Verbindungselemente u.a. auch zur Herstellung winkliger oder gar gelenkiger Verbindungen zwischen Strangprofilteilen oder zur Schaffung definierter Eckverbindungen mehrerer Strangprofilteile sehr häufig eingesetzt. Es ist bekannt, dass ein Verbindungselement hierzu Kontaktbereiche aufweist, an denen das Verbindungselement in einer Einbaulage in einem direkten Kontakt mit den jeweiligen Strangpressprofil-Abschnitt steht. Die Kontaktbereiche stehen z.B. bei einer recht häufig realisierten 90°-Anbindung zweier zu verbindender Strangpressprofil-Abschnitte dementsprechend auch selber unter einem Winkel von 90° zueinander.

Aus der KR 10-1137201 B1 ist ein Verbindungselement für Strangprofil-Abschnitte aus Aluminium bekannt, das eine Haltbarkeit und Sicherheit durch Erhöhung der Verankerungskraft eines Profils für die Bildung eines Regals und eines Rahmen verbessert. Ein bekannte Verbindungselement weist Kontaktbereiche auf, an denen das Verbindungselement in einer Einbaulage in direktem Kontakt mit einer Schnittfläche eines jeweiligen Strangpressprofil-Abschnitts steht. Diese Kontaktbereiche weisen an einem Umfang verteilt angeordnete Eingriffselemente auf, die zum Einschieben in Nut-Schienen als Ausnehmungen eines jeweiligen Strangpressprofil-Abschnitts ausgebildet sind. An dem Verbindungselement ist für jeden Kontaktbereich zusätzlich eine Fixierung an einem jeweiligen Strangpressprofil-Abschnitt vorgesehen. Ein durch Ineinandergreifen von verteilten Eingriffselementen in entsprechende Nut-Schienen des jeweiligen Strangpressprofil-Abschnitts erzielter Formschluss wird damit durch einen Kraftschluss zwischen dem Verbindungselement und einem jeweiligen Strangpressprofil-Abschnitt ergänzt. Neben einer korrekten Ausrichtung von einem jeweiligen Verbindungselement und einem jeweiligen Strangpressprofil-Abschnitt zueinander beim Zusammenbau wird damit auch ein wirksames mechanisches Mittel gegen Verdrehen dieser Elemente gegeneinander bereitgestellt. Damit wird in einem Einsatz auch ein Verdrehen infolge einer Torsionsbeanspruchung verhindert und eine mechanische Belastbarkeit erhöht.

Aufgabe der vorliegenden Erfindung ist die Schaffung eines Verbindungselementes mit verbesserten Eigenschaften, das zudem eine schnellere Montage ermöglicht.

Diese Aufgabe wird erfindungsgemäß durch die Merkmale von Anspruch 1 gelöst. Demnach zeichnet sich ein erfindungsgemäßes Verbindungselement dadurch auf, dass eine für eine Verschraubung des Verbindungselements vorgesehene Betätigungsöffnung zur Aufnahme eines Führungselementes ausgebildet ist, wobei das Führungselement über die Betätigungsöffnung hinweg mindestens teilweise vorsteht oder herausragt. Das Verbindungselement erhält damit als verbesserte Eigenschaft mindestens eine zusätzliche mechanische Funktion, ohne dass dazu noch weitere Anbauteile separat angebracht werden müssten. Zur Darstellung einer möglichen Einsparung an Material, Platz und auch Arbeitszeit wird auf die nachfolgende Beschreibung einer nach dem Stand der Technik aufgebauten Schiebetüre verwiesen.

Vorteilhafte Weiterbildungen sind Gegenstand der Unteransprüche. Demnach ist das Führungselement in Form einer Rolle oder eines Rades beweglich oder eines sonstigen starren Elements ausgebildet, beispielsweise in Form eines Zapfens oder eines Führungsstiftes. Das Führungselement kann also beweglich oder starr an dem Verbindungselement fixiert sein. In deutlich vereinfachter Weise ist unter Verwendung eines gemäß dieser Ausführungsform aufgebauten Verbindungselements also einerseits ein beweglicher Teil eines Roll-Schienenführung, andererseits aber auch ein Zapfen für ein Scharnier oder Gelenk aufbaubar. In beiden Anwendungsfällen sind dann nur die jeweiligen Eingriffspartner in Form einer Führungsnut oder Laufschiene sowie eines Lagers vorzusehen.

Bei Aufnahme einer Rolle oder eines Rades in einer für eine Verschraubung des Verbindungselements vorgesehene Betätigungsöffnung ist das Verbindungselement ohne einen nach dem Stand der Technik bekannten zusätzlichen Beschlag als Träger einer Rolle oder eines ähnlichen Elements bereits fertig ausgebildet. Ein derart weitergebildetes Verbindungselement bildet einen kompakten, drehfesten und mechanisch belastbaren Eckverbinder mit bereits integriertem Führungselement hier in Form einer Rolle in einer dennoch sehr schmalen Bauform bei wenigen Einzelteilen, kurzer Einbauzeit und aufgrund des Wegfalls zusätzlicher Beschläge auch vergleichsweise flacher Bauweise.

Vorteilhafterweise sind die Eingriffselemente an dem Verbindungselement als Zapfen ausgebildet, die über einen Umfang verteilt angeordnet zur Bildung einer drehfesten und mechanisch auf Torsion belastbaren Verbindung in Ausnehmungen eines jeweiligen Strangpressprofil-Abschnitts eingreifen. In einer Einbaulage des Verbindungselements an dem Strangpressprofil-Abschnitt sind diese Eingriffselemente über einen Umfang eines jeweiligen Strangpressprofil-Abschnitts verteilt fluchtend und spielarm eingreifend angeordnet. Diese Zapfen sind als Eingriffselemente geometrisch also an einen jeweiligen Strangpressprofil-Abschnitt so angepasst, dass die genannten Elemente über einen Umfang gleichmäßig verteilt angeordnet fluchtend ineinander eingreifen. Das Verbindungselement stellt also gerade in einem Kontaktbereich eine stetige Fortsetzung des Strangpressprofil-Abschnitts dar.

Gemäß einer bevorzugten Weiterbildung der Erfindung weisen die Eingriffselemente an einem freien Endbereich Phasen auf. Diese Phasen erleichtern einen Zusammenbau und können auch die Notwendigkeit eines Entfernens von Schnittgraten an einem jeweiligen Strangpressprofil-Abschnitt deutlich reduzieren.

In einer bevorzugten Ausführungsform der Erfindung ist die Fixierung des Verbindungselements an einem jeweiligen Strangpressprofil-Abschnitt als Verschraubung ausgebildet, die durch das Verbindungselement hindurch verlaufend vorgesehen ist, vorzugsweise entlang einer Längsachse eines jeweiligen Strangpressprofil-Abschnitts. In einfacher und zuverlässiger Weise ergibt sich durch Einstecken eines Verbindungselements auf einem jeweiligen Strangpressprofil-Abschnitt und Verschrauben neben einem dauerhaften und auch unter dynamischer Beanspruchung zuverlässigen Kraftschluss auch ein Formschluss.

Vorteilhafterweise weist ein Verbindungselement für jede Verschraubung eine Betätigungsöffnung auf. Das Verbindungselement ist damit gut zugänglich, liegt aber auch in dem Verbindungselement geschützt angeordnet.

Vorzugsweise ist die Rolle auf einer in dem Verbindungselement innenliegend angeordnete und mit dem Verbindungselement bündig abschließende Achse gelagert. Diese Achse weist in einer Ausführungsform der Erfindung eine Fixierung durch Verschraubungen auf, die außenseitig an dem Verbindungselement vorgesehen sind. Diese Bauweise unterstreicht die schmale und flache Bauform dieses Eckverbinders mit integrierter Rolle gerade bei Verwendung als unsere bzw. Boden-Laufrolle an einem Rahmen aus Strangpressprofil-Abschnitten.

In einer alternativen Ausführungsform ist die Achse nach außen hin über eine Breite des Verbindungselements einseitig fortgesetzt und dort zur drehbaren Aufnahme eines Rades oder einer Rolle ausgebildet. So wird unter weitgehend unveränderter Bauform z.B. eine in einer äußeren Laufschiene aufgehängte Rolle als Bestandteil eines kompakten Eckverbinders realisiert.

Ein besonderer Vorteil eines erfindungsgemäßen Verbindungselements liegt darin, dass das Verbindungselement und die Eingriffselemente an den Kontaktbereichen einstückig ausgebildet sind. Damit zeichnet sich ein erfindungsgemäßes Verbindungselement durch eine insgesamt einfache Bauweise und einfache Handhabung in Anpassung an ein jeweiligen Typ eines Strangpressprofils bzw. dessen Querschnittsfläche aus. Ferner ist ein erfindungsgemäßes Verbindungselement als Fräs-, 3D-Druck-, Sinter- oder Spritzgießteil ausgeführt ist. Als Materialien stehen für ein derartiges Verbindungselement Metalle, insbesondere Aluminium, aber auch diverse Kunststoffe oder Mischungen daraus zur Auswahl. Die vorstehend genannten Materialien und Herstellungsverfahren eröffnen in einfacher Weise auch die Möglichkeit einer zuverlässigen und preiswerten Herstellung erfindungsgemäßer Verbindungselemente in großen Stückzahlen.

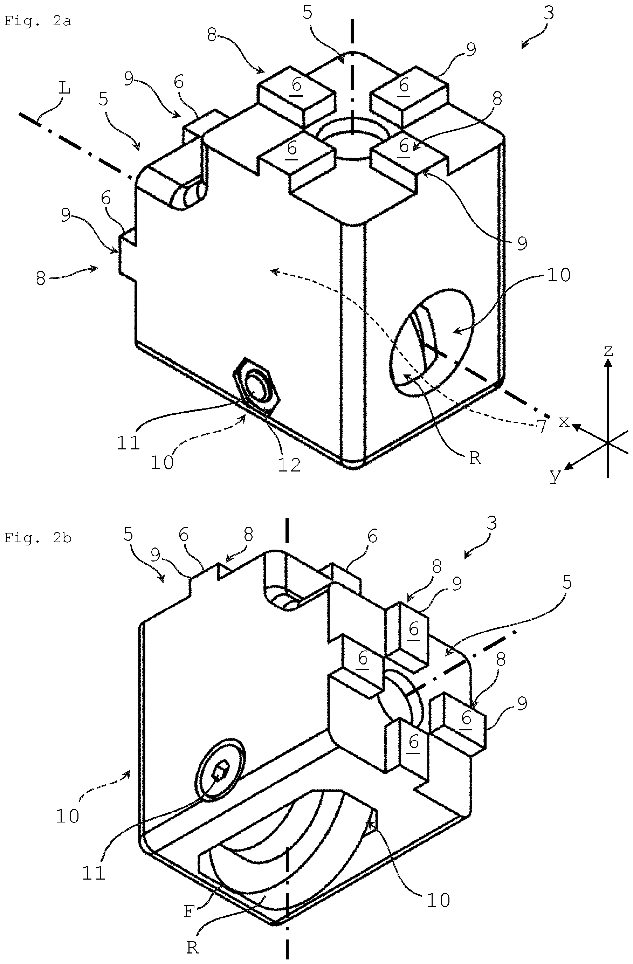

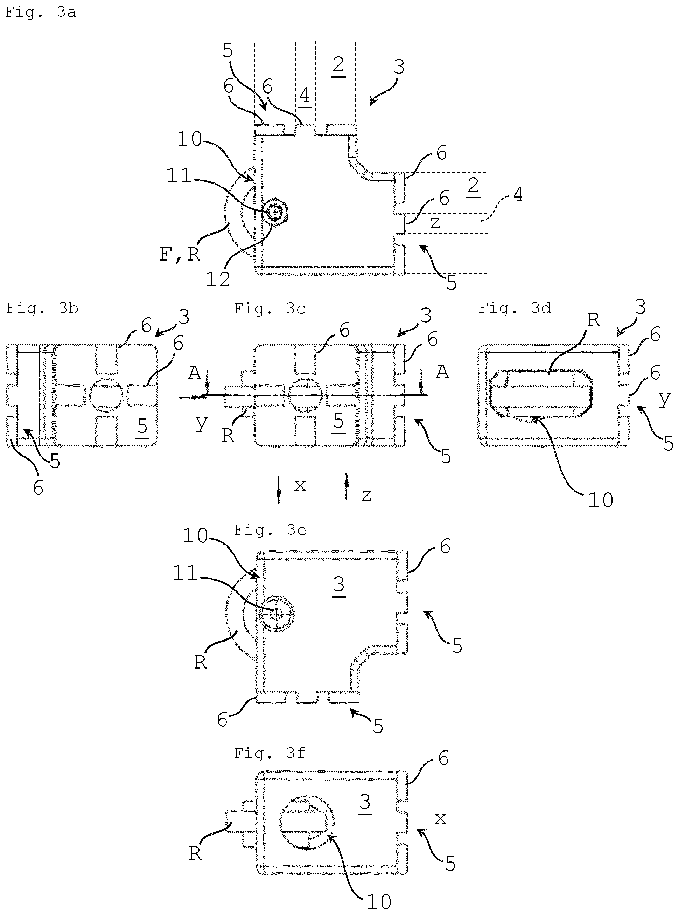

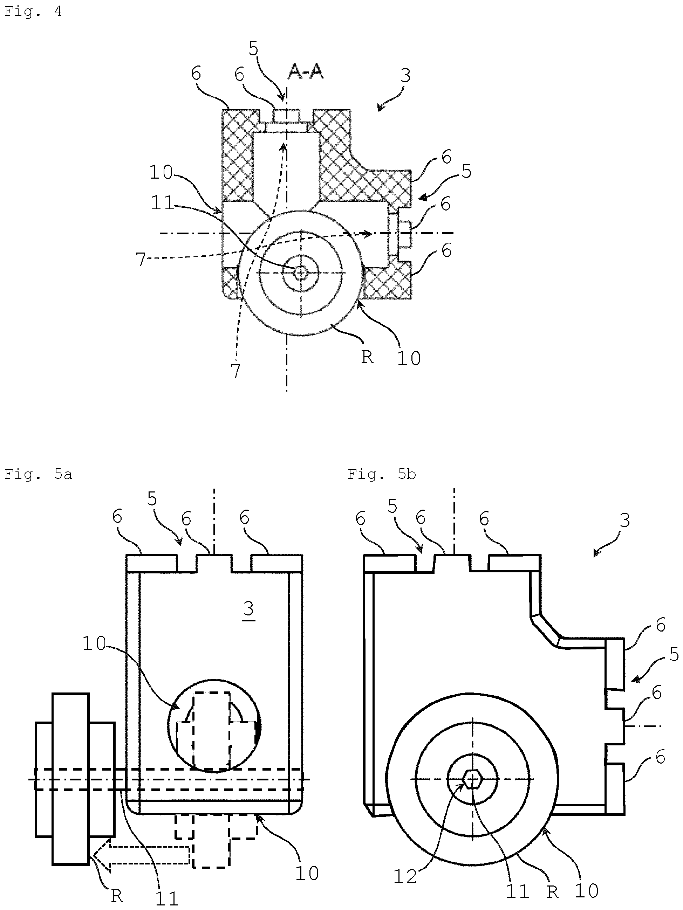

Nachfolgend werden weitere Merkmale und Vorteile erfindungsgemäßer Ausführungsformen unter Bezugnahme auf Ausführungsbeispiele anhand der Zeichnung näher erläutert. Darin zeigen in schematischer Darstellung:
Figuren 1a und 1b:
   räumliche Darstellungen eines ersten Ausführungsbeispiels eines Verbindungselements mit einem angedeuteten Führungselement;
Figuren 2a und 2b:
   räumliche Darstellungen eines zweiten Ausführungsbeispiels eines Verbindungselements, das gegenüber dem ersten Ausführungsbeispiel um ein Führungselement in Form einer Rolle erweitert wurde;
Figuren 3a bis 3f:
   Ansichten des zweiten Ausführungsbeispiels
Figur 4: eine Schnittdarstellung in einer Ebene A-A von Figur 3c;
Figuren 5a und 5b:
   zwei Ansichten eines dritten Ausführungsbeispiels in einer Darstellung gemäß der Figuren 3e und 3f;
Figuren 6a und 6b:
   zwei Ansichten eines vierten Ausführungsbeispiels in einer Darstellung gemäß der Figuren 2a und 2b;
Figuren 7a bis 7d:
   Ansichten des vierten Ausführungsbeispiels
Figuren 8a bis 8f:
   einen unter Verwendung von Verbindungselementen gemäß dem vierten Ausführungsbeispiel aufgebauten Rahmen für eine aufgehängte Schiebetür in dreidimensionaler Ansichten, Seitenansichten mit vergrößerten Einzelheiten und
Figuren 9a bis 9e:
   einen bekannten Rahmen für eine aufgehängte Schiebetür, der aus über Verbindungselemente miteinander unter 90°-Winkeln verbundenen Profilabschnitten nach dem Stand der Technik aufgebaut und über die auch an einer Unterkante über Rollen in einer Schiene geführt ist mit einer Ansicht und Ausschnittsvergrößerungen.

Über die verschiedenen Abbildungen hinweg werden für gleiche Elemente stets die gleichen Bezugszeichen verwendet. Dabei wird nachfolgend ohne Beschränkung der Erfindung nur eine Anpassung eines erfindungsgemäßen Verbindungselements auf eine Querschnittsfläche bzw. Schnittfläche eines Aluminium Vierkant-Strangprofils dargestellt und beschrieben. Anpassungen an andere Querschnittsformen von Strangprofilen sowie von einem zu einer Längsachse senkrechten Schnitt des jeweiligen Strangprofils sind für den Fachmann offensichtlich.

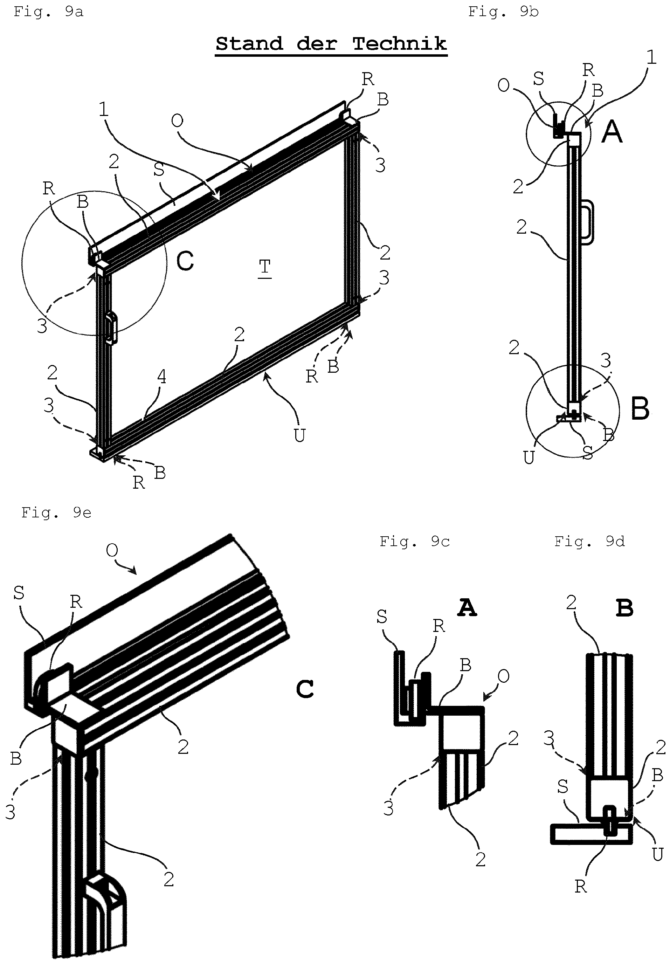

Figur 9a zeigt in perspektivischer Darstellung einen aus dem Stand der Technik grundsätzlich bekannten Rahmen 1, der ein nicht weiter dargestelltes Türblatt T tragend umschließt. Dieser Rahmen 1 umfasst vier paarweise gleiche Abschnitte 2 eines Strangpressprofils, die über Verbindungselemente 3 miteinander unter 90°-Winkeln verbundenen sind. Dieser Rahmen 1 dient nachfolgend als Schiebetür, die an einer Oberkante O über Beschläge B an Rollen R an einer Lauf- oder Führungs-Schiene S aufgehängt ist. Ferner ist diese Schiebetür auch an einer Unterkante U über Rollen R an Beschlägen B in einer Lauf- oder Führungs-Schiene S geführt, oder aber in einer Nut in einem Boden.

Eine derartige Schiebetür ist ein bekanntes Element zum schnellen und sicheren Öffnen und Schließen beispielsweise eines Maschinengehäuses. Sein Aufbau umfasst jedoch zahlreiche Einzelschritte, da aus den Strangprofilabschnitten 2 erst der mit dem Türblatt T zu füllende Rahmen 1 aufgebaut werden muss. Für eine derartige Verbindung zweier Strangprofilabschnitte 2 ist die Verwendung einer Schraubverbindung bekannt, die in einen in einer Nut-Schiene 4 verschieblichen Nutstein eingreift, was hier nicht weiter dargestellt ist. Ein Beschlag mit Rolle ist in der WO 98/38408 A1 offenbart, wobei auch hier erst einer Fixierung der Strangprofilabschnitte nachfolgend an der Oberkante O des Rahmens 1 separate Beschläge mit Rollen R fixiert werden, ggf. auch an der Unterkante U, in Abstimmung mit einer jeweiligen Laufschiene. Eine alternative Befestigungstechnik ist z.B. in WO 2014/140031 A1 angegeben.

Figur 9b zeigt eine seitliche Ansicht der Schiebetür von Figur 9a mit einer oberen Schiene S zum Einhängen von Rollen R, die über Beschläge B an der Oberkante O fixiert sind, und einer unteren Schiene S zur Führung von Rollen, die über Beschläge B an der Unterkante U fixiert sind. Die Figuren 9c und 9d sind vergrößerte Ausschnitte A und B aus Figur 9b zur Darstellung von Bereichen um die hier verdeckt liegenden Verbindungselemente 3 sowie der Beschläge B mit den Rollen R mit zugehörigen Schienen S. Figur 9e zeigt in perspektivischer Darstellung eine Einzelheit C von Figur 9a um einen Beschlag B mit Rolle und deren Eingriff in die obere Führungsschiene S nahe der Oberkante O des Rahmens 1.

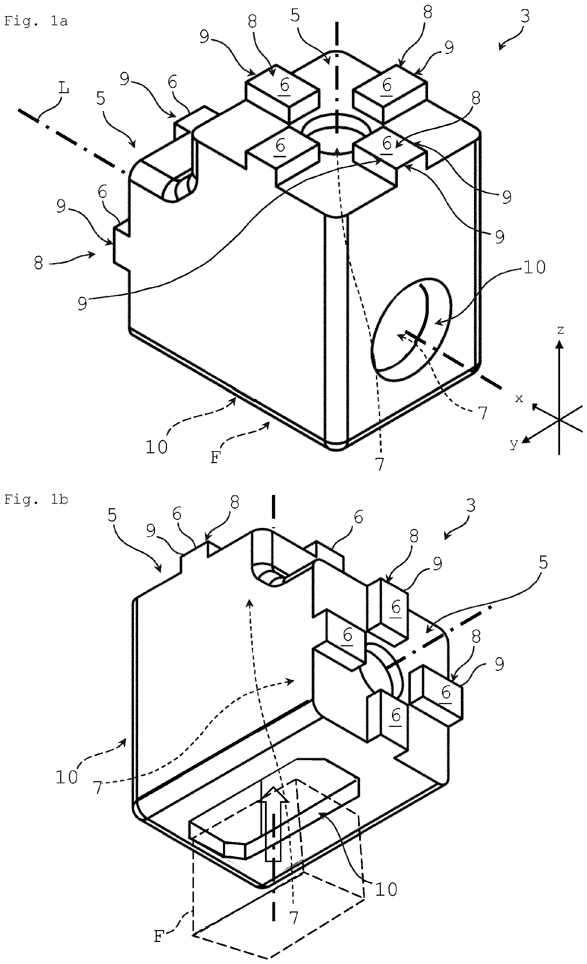

Nachfolgend werden Ausführungsbeispiele einer vorteilhaften Lösung für eine verbesserte Verbindung von Strangpressprofil-Abschnitten vorgestellt. In den Abbildungen der Figuren 1a und 1b sind räumliche Darstellungen eines ersten Ausführungsbeispiels eines Verbindungselements 3 dargestellt, das gegenüber bekannten Verbindungselementen zwischen Strangprofilabschnitten 2 verbesserte mechanische Eigenschaften aufweist und bei einfacher Bauweise zudem eine schnellere Montage einer zusätzlichen Funktionalität ermöglicht, wie nachfolgend beschrieben wird. Das Verbindungselement 3 weist dazu hier zwei Kontaktbereiche 5 auf, an denen jeweils ein Verbindungselement 3 in einer späteren Einbaulage in direktem Kontakt mit den jeweiligen Strangpressprofil-Abschnitten 2 steht. Diese Kontaktbereiche 5 umfassen an ihrem Umfang gleichmäßig verteilt angeordnete Eingriffselemente 6. Diese Eingriffselemente 6 sind zum Einschieben in Nut-Schienen 4 als Ausnehmungen eines jeweiligen Strangpressprofil-Abschnitts 2 angepasst als Zapfen ausgebildet, können aber grundsätzlich jede prismatische Raumform aufweisen. Über einen Umfang eines jeweiligen Strangpressprofil-Abschnitts 2 hinweg sind diese Eingriffselemente 6 des Verbindungselements 2 derart verteilt, dass sie in einer Einbaulage fluchtend eingreifen und damit in einem Kontaktbereich 5 einen stetigen Übergang von dem Verbindungselement 2 hin zu einem jeweiligen Strangpressprofil-Abschnitt 2 bilden.

Ferner ist an dem Verbindungselement 3 für jeden Kontaktbereich 5 zusätzlich eine Fixierung 7 vorgesehen, durch die das Verbindungselement 3 in dem betreffenden Kontaktbereich 5 an einem jeweiligen Strangpressprofil-Abschnitt 2 unter Kraftschluss fixiert ist. Damit ergibt sich in jedem Kontaktbereich 5 eine Kombination aus Kraftschluss und Formschluss.

In dem vorliegenden Ausführungsbeispiel sind die Eingriffselemente 6 als quaderförmige Zapfen ausgebildet. Es ist aber in nicht weiter dargestellten Ausführungsbeispielen auch eine weitergehende Anpassung an eine jeweilige freie Kontur einer Nut-Schiene 4 eines jeweiligen Strangpressprofil-Abschnitts 2 möglich. Damit wird mit dem Einschieben ein Formschluss zwischen einem jedem der Eingriffselemente 6 und einer zugehörigen Nut-Schiene 4 des Strangprofilabschnitts 2 geschaffen. In jedem Fall weist eine Verbindung der vorstehend beschriebenen Art eine Kombination aus Form- und Kraftschluss auf, so dass z.B. ein dementsprechend aufgebauter Rahmen 1, vgl. Figuren 9a bis 9e, durch eine gegenüber einer reib- und kraftschlüssigen Nutstein-Verschraubung gesteigerte Verwindungssicherheit deutlich verbesserte mechanische Eigenschaften aufweist.

In einer in diesen Abbildungen der Figuren 1a und 1b nur angedeuteten Weise zeichnen sich die Eingriffselemente 6 ferner dadurch aus, dass sie jeweils an einem freien Endbereich 8 Phasen 9 aufweisen. Diese Phasen 9 sind hier umlaufend vorgesehen und wirken beim Zusammenbau in gewisser Weise als Führungen, durch die die jeweiligen Eingriffselemente 5 eines Verbindungselements 3 leichter in korrekter Ausrichtung in die betreffenden Nutschienen 4 des betreffenden Strangpressprofil-Abschnitts 2 einführbar sind und damit eine Montage erleichtern sowie beschleunigen.

Die Fixierung 7 des Verbindungselements 3 an einem jeweiligen Strangpressprofil-Abschnitt 2 ist in diesem Ausführungsbeispiel als Verschraubung ausgebildet. Diese Verschraubung ist hier durch das Verbindungselement 3 mittig hindurch verlaufend vorgesehen, also entlang einer Längsachse L eines jeweilig angeschlossenen Strangpressprofil-Abschnitts 2. Das Verbindungselement 3 weist für jede dieser Fixierungen 7 des Verbindungselements 3 an dem jeweiligen Strangpressprofil-Abschnitt 2 eine Betätigungsöffnung 10 auf. Damit ist die Fixierung 7 leicht zugänglich und liegt dennoch geschützt. Derartige Verschraubungen sind über Schrauben und/oder Zuganker etc. in zahlreichen Varianten bekannt und werden daher nicht weiter dargestellt.

Eine wesentliche Erweiterung des Verbindungselements 3 stellt die in Figur 1b dargestellte Betätigungsöffnung 10 dar, in die nun nach einer vorstehend beschriebenen Fixierung ein hier nur in Form eines Quaders angedeutetes Führungselement F eingeführt und je nach Anwendungsfall ggf. auch fixiert wird. Die Fixierung durch einen Zapfen oder eine Verschraubung wird nachfolgend noch in einer von vielen möglichen Bauformen gezeigt und beschrieben. Durch dieses Führungselement F wird eine zusätzliche Funktionsweise für das Verbindungselement 3 geschaffen, die von einer in weiten Grenzen freien Auswahl einer Art des Führungselements F abhängt: Als starres Führungselement F kann beispielsweise ein Drehzapfen eingesetzt werden, so dass im Zusammenspiel mit einer entsprechend in einer finalen Einbaulage fluchtenden Ausnehmung ein einfaches Schwenk- oder Drehgelenk gebildet wird, oder als Angel eins Scharniers. Mit Blick auf das Beispiel von Figur 9a kann als starres Führungselement F aber auch ein Führungszapfen gewählt werden, der in einer Einbausituation in einer Nut oder Führungsschiene verschieblich ist. Im Gegensatz zu einem Aufbau gemäß Figur 9a sind dazu aber nur ein entsprechend ausgebildetes und über die Betätigungsöffnung 10 hinweg mindestens teilweise vorstehendes oder herausragendes Führungselement F in die Betätigungsöffnung 10 einzusetzen sowie ggf. zu fixieren. Weitere Anbauten und zusätzliche Verschraubungen entfallen damit also.

Die räumlichen Darstellungen der Figuren 2a und 2b in einem kartesischen Koordinatensystem zeigen ein zweites Ausführungsbeispiel eines Verbindungselements 3, das in besonders vorteilhafter Weise gegenüber dem ersten Ausführungsbeispiel um ein Führungselement F in Form einer drehbar gelagerten Rolle R erweitert ist. Dazu ist eine für eine Verschraubung des Verbindungselements 3 vorgesehene Betätigungsöffnung 10 zur Aufnahme der Rolle R oder eines Rades geweitet ausgebildet. Die Rolle R auf einer in dem Verbindungselement 3 innenliegend angeordnete und mit dem Verbindungselement 3 bündig abschließenden Achse 11 gelagert. Diese Achse 11 weist in diesem Ausführungsbeispiel eine Fixierung durch Verschraubungen 12 auf, die außenseitig an dem Verbindungselement 3 vorgesehen sind. Die beschriebene Rolle R ist damit schon über das kompakt erweiterte Verbindungselement 3 Bestandteil eines Rahmens 1, ohne dass Beschläge als separate Bauteile mit Rollen R zusätzlich an dem Rahmen 1 fixiert werden müssten. Damit werden zahlreiche Bauteile und auch Arbeitszeit beim Aufbau unter Wahrung der vorstehend angegebenen Vorteile eingespart.

Die Figuren 3a bis 3f zeigen Ansichten des Ausführungsbeispiels der Figuren 2a und 2b in Ansichten nach DIN in den Raumachsen x, y, z des kartesischen Koordinatensystems. Dabei sind in Figur 3a zusätzlich die sich in einer Einbaulage im Kontaktbereich 5 fluchtend und stetig anschließenden Profilabschnitte 2 angedeutet.

Figur 4 zeigt eine Schnittdarstellung in einer Ebene A-A von Figur 3c. Hieraus geht zusammen mit den Abbildungen der Zeichnungen 3b und 3d hervor, dass die Rolle R erst nach Verschraubung des Verbindungselements 3 an den anschließenden Profilabschnitten 2 in die angepasst erweiterte Betätigungsöffnung 10 eingesetzt wird. Nach dem Einschieben einer Achse 11 wird die Rolle 5 durch Verschrauben 12 drehbar in dem Verbindungselement 3 fixiert, siehe dazu auch die Abbildungen der Figuren 3a und 3e. Das Einsetzen und Fixieren der Rolle R erfolgt also vorzugsweise als letzter Schritt eines Zusammenbaus.

Figuren 5a und 5b stellen zwei Ansichten eines dritten Ausführungsbeispiels in einer Darstellung der Figuren 3e und 3f dar. In dieser alternativen Ausführung ist die Achse 11 nach außen hin über eine Breite des Verbindungselements 3 hinaus einseitig verlängert fortgesetzt worden, um dort zur drehbaren Aufnahme des Rades oder der Rolle R ausgebildet zu sein. So wird in einfacher Weise eine kompakte und mechanisch zuverlässige Eckverbindung mit einer Rolle zum Aufhängen an einer Schiene realisiert.

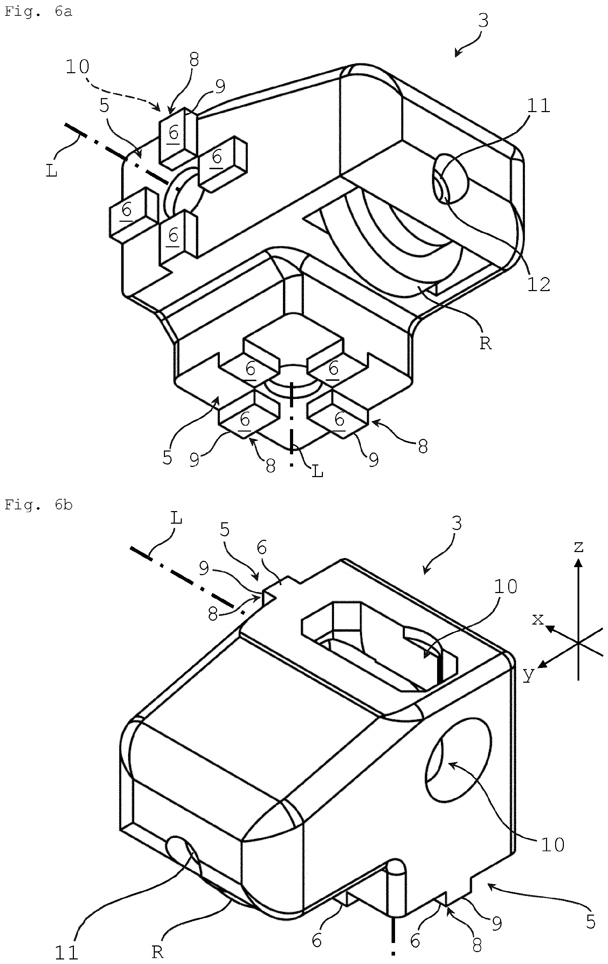

Die Figuren 6a und 6b zweigen zwei räumliche Ansichten eines vierten Ausführungsbeispiels in einer Darstellung der Figuren 2a und 2b, das von seiner Funktion her dem vorstehend beschriebenen dritten Ausführungsbeispiel gemäß der Figuren 5a und 5b entspricht. Hierin ist ein massiver Körper des Verbindungselements 3 erweitert worden. Durch diese Erweiterung wird erreicht, dass die Rolle R nun durch den Körper des Verbindungselements 3 soweit umfasst wird, um die Achse 11 an gegenüberliegenden Seiten der Rolle R in dem Verbindungselement 3 mechanisch zu fixieren.

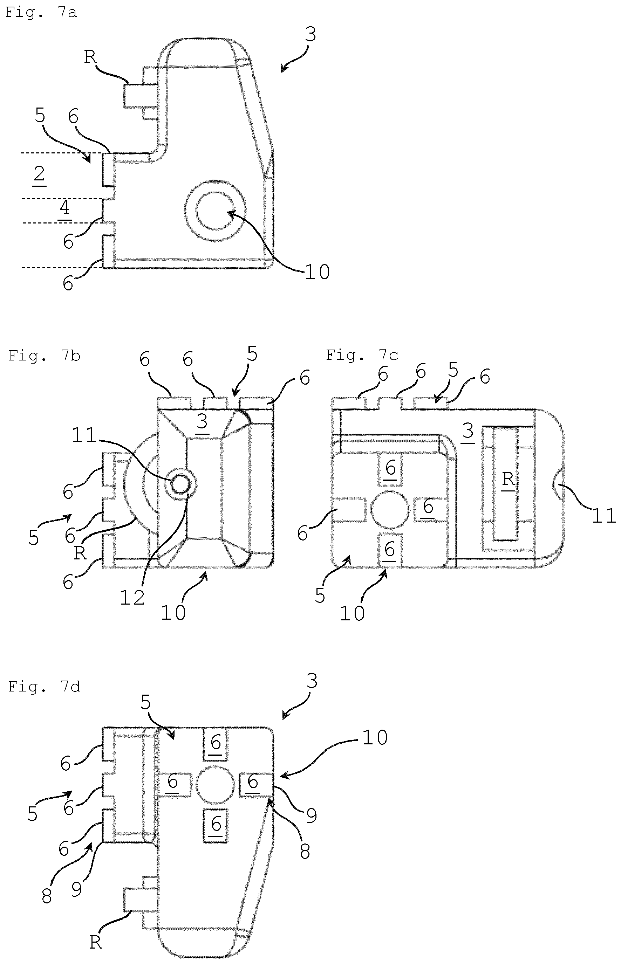

Figuren 7a bis 7d zeigen ergänzend Ansichten des vierten Ausführungsbeispiels gemäß der Figuren 6a und 6b.

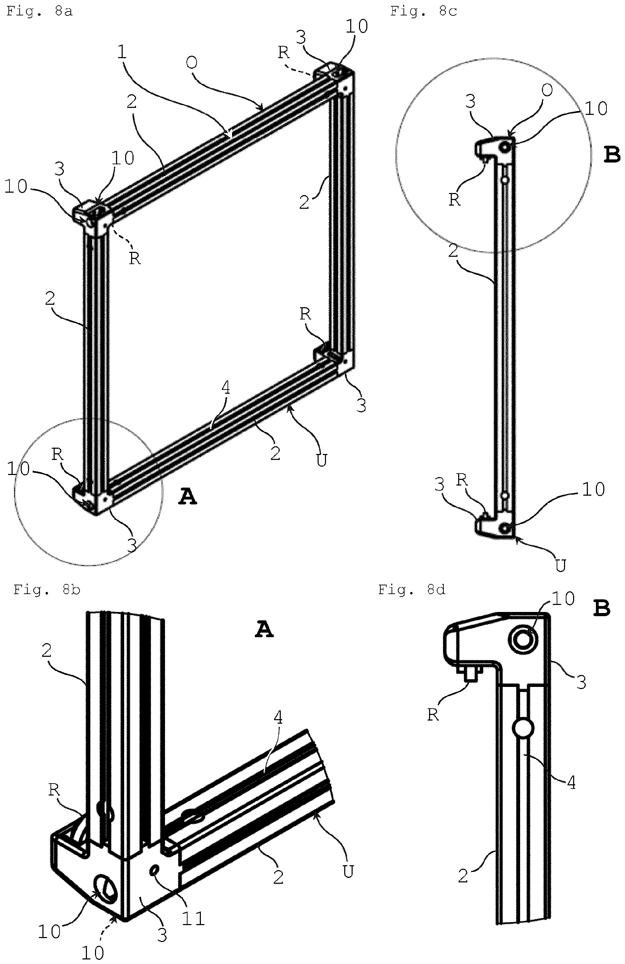

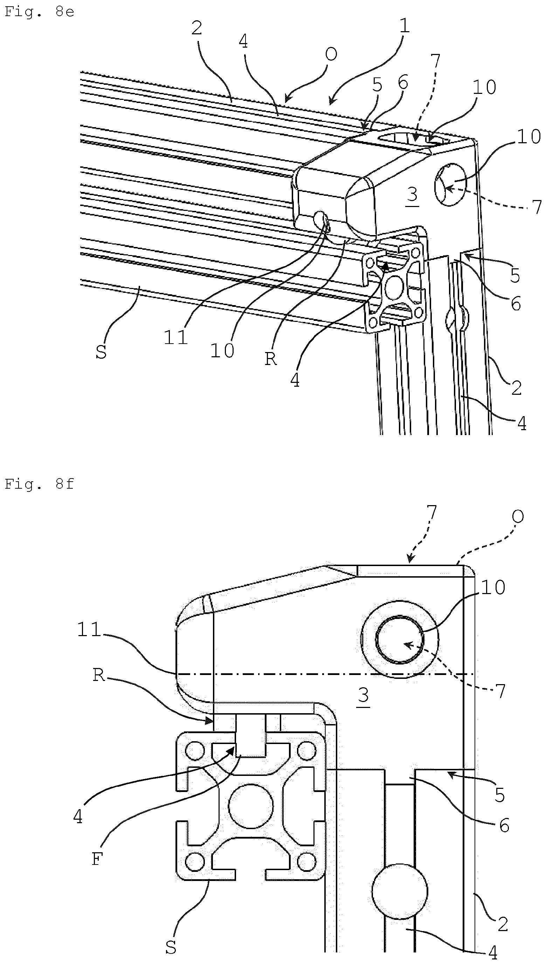

Die Folge der Figuren 8a bis 8f stellt einen unter Verwendung von Verbindungselementen 3 gemäß dem vierten Ausführungsbeispiel aufgebauten Rahmen 1 für eine aufgehängte Schiebetür dar, wie vorstehend zu der Figurenfolge 9a bis 9e bereits beschrieben. In dreidimensionaler Ansicht fällt auf, dass der Rahmen 1 nun vergleichsweise kompakter aufgebaut ist. Anhand einer Seitenansicht mit vergrößerten Einzelheiten ist eine deutlich gesenkte Anzahl von Komponenten erkennbar, zumal unter Verwendung der in den Figuren 6a, 6b und 7a bis 7d gezeigten Verbindungselemente 3 an der Oberkante O und Unterkante U zumindest zusätzliche Beschläge mit in Figuren 9a - 9e nicht weiter dargestellten Fixierungsmitteln entfallen.

In Abwandlung der vorstehend beschriebenen Ausführungsbeispiele ist für den Fachmann leicht erkennbar, dass anstelle der Rolle R neben einem passiven Führungsstift, der zu einem führenden Eingriff in eine Nut einstellbar ist, auch ein Sensor oder ein elektro-mechanisches Schaltelement in das Verbindungselement 3 eingesetzt werden kann, z.B. ein Schaltkontakt, ein Taster oder ein Endschalter. Grundsätzlich könnte hier auch ein aktives Element, wie z.B. ein Antrieb in Form eines elektrischen Motors eingesetzt werden.

Damit ist vorstehend ein vorteilhaft einfach einsetzbares Verbindungselement 3 mit Anpassungen an unterschiedliche Einsatzfälle dargestellt und beschrieben worden. Dieses Verbindungselement 3 ist trotz seiner mechanischen Beanspruchung einstückig als Fräs-, 3D-Druck-, Sinter- oder Spritzgießteil ausgeführt. Als Materialien stehen für ein derartiges Verbindungselement 3 Metalle zur Verfügung, insbesondere Aluminium und dessen Legierungen. Es stehen aber auch diverse Kunststoffe oder Mischungen von Kunststoffen, ggf. mit Verstärkungsfasern zur Auswahl.

Über eine Verbindung von zwei Strangpressprofil-Abschnitten unter einem 90° Winkel hinaus sind nicht nur Anpassungen an davon abweichende Winkel oder gar ein Gelenk mit oder ohne Winkel-Arretierung leicht realisierbar. Ebenso kann ein erfindungsgemäßes Verbindungselement statt Strangpressprofil-Abschnitte in zwei auch in drei Raumachsen miteinander in Form eines einstückigen Grundkörpers mechanisch sicher und zuverlässig verbinden. Auch bei Verbindung von drei oder sogar mehr Strangpressprofil-Abschnitten miteinander zu einem dreidimensional ausgelegten Gerüst oder sonstigen Tragkörper ist eine Verwendung einer Rolle o.ä. in den dargestellten Arten in vorteilhafter Weise leicht möglich.

### Bezugszeichenliste

- 1: Rahmen
- 2: Strangpressprofil-Abschnitt
- 3: Verbindungselement
- 4: Nut-Schiene / Ausnehmung an dem Strangpressprofil-Abschnitt 2
- 5: Kontaktbereich des Verbindungselements 3 mit dem Strangprofil-Abschnitt 2
- 6: Eingriffselement des Verbindungselements 3 im Kontaktbereich 5
- 7: Fixierung
- 8: freier Endbereich
- 9: Phase
- 10: Betätigungsöffnung
- 11: Achse
- 12: Verschraubung

- B: Beschlag
- F: Führungselement
- L: Längsachse des Strangpressprofil-Abschnitt 2
- O: Oberkante
- R: Rolle
- S: Lauf- und Führungsschiene / Nut
- T: Türblatt
- U: Unterkante
- x,y,z: kartesische Koordinaten

## Patentansprüche

1. Verbindungselement (3) für Strangprofil- oder Strangpressprofil-Abschnitte (2), wobei das Verbindungselement (1) Kontaktbereiche (5) aufweist, an denen das Verbindungselement (3) in einer Einbaulage in direktem Kontakt mit einer Schnittfläche der jeweiligen Strangpressprofil-Abschnitte (2) steht,
wobei diese Kontaktbereiche (5) an ihrem Umfang verteilt angeordnete Eingriffselemente (6) umfassen und
die Eingriffselemente (6) eines Kontaktbereichs (5) zum Einschieben in Nut-Schienen (4) als Ausnehmungen eines jeweiligen Strangpressprofil-Abschnitts (2) an einer jeweiligen Schnittfläche ausgebildet sind, wobei
an dem Verbindungselement (3) für jeden Kontaktbereich (5) zusätzlich eine Fixierung (7) an einem jeweiligen Strangpressprofil-Abschnitt (2) vorgesehen ist und
jede Fixierung (7) des Verbindungselements (3) an einem jeweiligen Strangpressprofil-Abschnitt (2) eine Betätigungsöffnung (10) aufweist,
**dadurch gekennzeichnet, dass**
eine für eine Verschraubung des Verbindungselements (3) vorgesehene Betätigungsöffnung (10) zur Aufnahme eines Führungselementes (F) ausgebildet ist, wobei das Führungselement (F) über die Betätigungsöffnung (10) hinweg mindestens teilweise vorsteht oder herausragt.

2. Verbindungselement nach dem vorhergehenden Anspruch,
**dadurch gekennzeichnet, dass** das Führungselement (F) in Form einer Rolle (R) oder eines Rades beweglich, oder eines sonstigen starren Elements ausgebildet ist.

3. Verbindungselement nach dem vorhergehenden Anspruch,
**dadurch gekennzeichnet, dass** das Führungselement (F) starr als Zapfen eines Scharniers oder Gelenks oder als Führungsstift ausgebildet ist.

4. Verbindungselement nach einem der vorhergehenden Ansprüche, **dadurch gekennzeichnet, dass** die Eingriffselemente (6) als Zapfen ausgebildet sind, die in einer Einbaulage über einen Umfang eines jeweiligen Strangpressprofil-Abschnitts (2) verteilt fluchtend und spielarm eingreifend angeordnet sind.

5. Verbindungselement nach einem der vorhergehenden Ansprüche, **dadurch gekennzeichnet, dass** die Eingriffselemente (6) an einem freien Endbereich (8) Phasen (9) aufweisen, die insbesondere umlaufend ausgebildet sind.

6. Verbindungselement nach einem der vorhergehenden Ansprüche, **dadurch gekennzeichnet, dass** die Fixierung (7) des Verbindungselements (3) an einem jeweiligen Strangpressprofil-Abschnitt (2) als Verschraubung ausgebildet ist, die durch das Verbindungselement (3) hindurch verlaufend vorgesehen ist, vorzugsweise entlang einer Längsachse (L) eines jeweiligen Strangpressprofil-Abschnitts (2) .

7. Verbindungselement nach Anspruch 1, **dadurch gekennzeichnet, dass** das Führungselement (F) in Form einer Rolle (R) auf einer in dem Verbindungselement (3) innenliegend angeordneten und mit dem Verbindungselement (3) bündig abschließenden Achse (11) gelagert ist.

8. Verbindungselement nach dem vorhergehenden Anspruch,
**dadurch gekennzeichnet, dass** die Achse (11) durch eine Verschraubung (12) fixiert ist, wobei die Verschraubung (12) vozugsweise außenseitig an dem Verbindungselement (3) vorgesehen ist.

9. Verbindungselement nach einem der vorhergehenden Ansprüche 1 bis 5 und 7 bis 8, **dadurch gekennzeichnet, dass** eine Achse (11) nach außen hin über eine Breite des Strangpressprofil-Abschnitts (2) hinaus einseitig fortgesetzt und dort zur drehbaren Aufnahme eines Rades oder einer Rolle (R) ausgebildet ist.

10. Verbindungselement nach einem der vorhergehenden Ansprüche, **dadurch gekennzeichnet, dass** das Verbindungselement (3) und die Eingriffselemente (5) einstückig als Fräs-, 3D-Druck- oder Spritzgießteil aus Metallen, insbesondere Aluminium, oder einem Kunststoff oder Mischungen daraus ausgeführt sind.
